# EUROPÄISCHE PATENTANMELDUNG

(11) **EP 2 754 411 A1**
(43) Veröffentlichungstag der Anmeldung: **16.07.2014**
(21) Anmeldenummer: 13150758.4
(22) Anmeldetag: 10.01.2013
(51) Int. Cl.: A61C 19/045

(54) **Elektronisches Registriergerät zur Erfassung von Kieferbewegungen**

(71) Anmelder: Kaltenbach & Voigt GmbH, 88400 Biberach (DE)
(72) Erfinder: Walter, Lang, 88299 Leutkirch (DE)
(74) Vertreter: Thun, Clemens

(57) **Zusammenfassung**

Die Erfindung betrifft ein elektronisches Registriergerät zur Erfassung von Bewegungen des Unterkiefers eines Menschen relativ zu dem Oberkiefer des Menschen. Das Registriergerät weist eine Bissgabel 1 zur Erfassung einer Relativposition des Oberkiefers zu Bezugspunkten am Kopf des Menschen auf, wobei die Bissgabel 1 dazu ausgebildet ist, eine plastische Masse zur Erfassung eines Abdrucks der Zahnreihe des Oberkiefers aufzunehmen. Weiterhin weist das Registriergerät eine Unterkieferbefestigung zur Erfassung von Bewegungen des Unterkiefers gegenüber dem Oberkiefer auf. Die Bissgabel 1 weist wenigstens drei Röntgen-Referenzkörper 2, 3, 4 auf, die ein Material aufweisen, das in einem Röntgenbild erkennbar ist, insbesondere Metall.

## Beschreibung

Die Erfindung betrifft ein elektronisches Registriergerät zur Erfassung von Bewegungen des Unterkiefers eines Menschen relativ zu dem Oberkiefer des Menschen, das eine Bissgabel zur Erfassung einer Relativposition des Oberkiefers zu Bezugspunkten am Kopf des Menschen aufweist, wobei die Bissgabel dazu ausgebildet ist, eine plastische Masse zur Erfassung eines Abdrucks der Zahnreihe des Oberkiefers aufzunehmen, sowie eine Unterkieferbefestigung zur Erfassung von Bewegungen des Unterkiefers gegenüber dem Oberkiefer.

Zur Herstellung von Zahnersatz, wie Kronen und Brücken ist es bekannt, Modelle von Zahnreihen eines Oberkiefers und des dazugehörenden Unterkiefers aus Wachs zu modellieren und diese in einem Artikulator durch Artikulationsbewegungen solange auf ihre Formgestaltung hin zu optimieren, bis eine harmonische Bewegung der Zahnformen zueinander gegeben ist. Dies wird als funktioneller Abgleich bezeichnet. Auf diese Weise lassen sich im Weiteren zeitintensive Einschleifarbeiten im Mund des betreffenden Patienten weitgehend vermeiden.

Die im Artikulator optimierte Zahnform wird dann gemäß dem Stand der Technik anschließend durch Scannen erfasst und in einem weiteren Schritt wird der gewünschte Zahnersatz, also beispielsweise die Krone bzw. Brücke mithilfe einer CAD CAM Fräs-/Schleifmaschine unter Nutzung der durch das Scannen erfassten Daten hergestellt, vorzugsweise aus Keramik.

Bekannt ist weiterhin eine Art "virtueller Artikulator". Hierbei handelt es sich um eine Software, mit der eine Bewegung der beiden gescannten Cripsmodelle von Ober- und Unterkiefer relativ zueinander simuliert werden kann. Um Einstelldaten für diesen virtuellen Artikulator ermitteln zu können, ist es zunächst erforderlich, die entsprechenden Gipsmodelle von Ober- und Unterkiefer-Zahnreihen herzustellen; anschließend müssen die Einstellwerte mithilfe dieser Gipsmodelle und eines mechanischen Artikulators ermittelt werden. Dies erfordert vergleichsweise hohen Aufwand.

Aus der WO 2007/020091 A1 ist ein von der Anmelderin unter der Handelsbezeichnung "ARCUS digma" vertriebenes elektronisches Registriergerät bekannt, das zur Einstellung von Artikulatoren dient. Mit diesem Gerät kann eine elektronische Bewegungsanalyse des Unterkiefers durchgeführt werden. Um die Bewegungen des Unterkiefers gegenüber dem Oberkiefer zu messen, wird mit dem Oberkiefer und dem Unterkiefer jeweils ein Traggestell verbunden. Das mit dem Oberkiefer am oberen Teil des Kopfes verbundene Traggestell, im Folgenden auch "Kopfteil" genannt, wird mit vier Mikrofonen in Form von Ultraschall-Empfängerelementen versehen, das mit dem Unterkiefer verbundene Traggestell, im Folgenden auch "Unterkieferbefestigung" genannt, mit drei entsprechenden Ultraschallsendern. Die zwölf Strecken zwischen den drei Sendern und den vier Mikrofonen werden bei Bewegungen des Unterkiefers gegenüber dem Oberkiefer hinsichtlich ihrer Längenänderungen ausgewertet.

Das Kopfteil umfasst ein Basiselement mit Stützelementen zum Stützen des Kopfteils an dem Kopf des betreffenden Menschen bzw. eines Patienten. Diese Stützelemente können insbesondere zwei rückwärtige Abstützelemente umfassen, die zur Anlage im Bereich der beiden Ohren ausgebildet sind, sowie ein Nasenstütze, die zur Anlage am oberen Nasenansatz ausgebildet ist.

Weiterhin umfasst das bekannte elektronische Registriergerät ARCUS digma eine Bissgabel, die zur Erfassung der Position der Oberkiefer-Zahnreihe relativ zu den Gehörgängen dient.

Der Erfindung liegt die Aufgabe zugrunde, ein verbessertes Registriergerät anzugeben. Insbesondere soll mit dem Registriergerät eine bessere bzw. einfachere Herstellung von Bohrschablonen in der Implantologie ermöglicht werden. Außerdem soll sich das Registriergerät besonders zur Kiefergelenkdiagnostik eignen.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist ein elektronisches Registriergerät zur Erfassung von Bewegungen des Unterkiefers eines Menschen relativ zu dem Oberkiefer des Menschen vorgesehen. Das Registriergerät weist eine Bissgabel zur Erfassung einer Relativposition des Oberkiefers zu Bezugspunkten am Kopf des Menschen auf, wobei die Bissgabel dazu ausgebildet ist, eine plastische Masse zur Erfassung eines Abdrucks der Zahnreihe des Oberkiefers aufzunehmen. Weiterhin weist das Registriergerät eine Unterkieferbefestigung zur Erfassung von Bewegungen des Unterkiefers gegenüber dem Oberkiefer auf. Die Bissgabel weist wenigstens drei Röntgen-Referenzkörper auf, die ein Material aufweisen, das in einem Röntgenbild erkennbar ist, insbesondere ein Metall.

Auf diese Weise lässt sich erzielen, dass eine Röntgenaufnahme des Menschen mit einer Information über die Bewegungen des Unterkiefers relativ zu dem Oberkiefer verbunden bzw. verknüpft werden kann. Hierdurch lässt sich beispielsweise die Lage und Richtung eines Implantats, wie sie durch eine Bohrschablone vorgegeben werden, in der Unterkieferdynamik testen. Bei der Röntgenaufnahme kann es sich beispielsweise um eine 3D-Röntgenaufnahme handeln. Der Einfluss der Okklusionsbewegungen lässt sich also bei der Ermittlung der Implantatposition berücksichtigen.

Ein bislang statisches 3D-Röntgenbild kann auf diese Weise "dynamisiert" werden. Dies hat allgemein Vorteile in der Kiefergelenkdiagnostik, weil durch das elektronische Registriergerät mit den Referenzkörpern Bewegungszentren auf das 3D-Röntgenbild überlagert werden können.

Herstellungstechnisch vorteilhaft bestehen die wenigstens drei Röntgen-Referenzkörper aus dem Material. Insbesondere können also die wenigstens drei Röntgen-Referenzkörper aus Metall bestehen.

Vorzugsweise weist die Bissgabel ein Trägerelement auf, an dem die Referenzkörper angeordnet sind, wobei das Trägerelement aus einem Material besteht, das für Röntgenstrahlen zumindest überwiegend durchlässig ist, insbesondere aus einem Kunststoff. Auf diese Weise lässt sich erzielen, dass eine Röntgenaufnahme besonders wenig durch Teile der Bissgabel beeinträchtigt wird.

Vorzugsweise besteht das Trägerelement dabei aus einem Stück bzw. ist einstückig ausgebildet. Hierdurch lässt sich eine besonders zuverlässige Relativanordnung der drei Röntgen-Referenzkörper zueinander gewährleisten.

Wenn die Bissgabel lediglich aus dem Trägerelement und den wenigstens drei Röntgen-Referenzkörpern besteht, lässt sich eine unerwünschte Beeinträchtigung des Röntgenbilds besonders zuverlässig verhindern.

Alternativ kann die Bissgabel weiterhin ein weiteres Teil aufweisen, das mit dem Trägerelement mittels Verbindungselementen, insbesondere reversibel lösbar verbunden ist. In diesem Fall lässt sich das weitere Teil vor der Aufnahme des Röntgenbilds einfach vom Trägerelement lösen bzw. abnehmen. Hierzu umfassen die Verbindungselemente vorzugsweise ein Schnapp- oder Rastelement. Hierdurch lässt sich die Verbindung besonders einfach lösen und gegebenenfalls auch wiederherstellen.

Vorzugsweise weist die Bissgabel einen Mundbereich auf, der dafür vorgesehen ist, zur Erfassung des Abdrucks in den Mund eingeführt zu werden, sowie einen Haltebereich, der dafür vorgesehen ist, zur Erfassung des Abdrucks zumindest größtenteils außerhalb des Munds zu verbleiben, wobei die Referenzkörper an dem Mundbereich ausgebildet sind. Hierdurch lässt sich erzielen, dass die Röntgen-Referenzkörper bei der Röntgenaufnahme besonders nahe an dem Oberkiefer des Menschen platziert sind. Auch lässt sich hierdurch eine Röntgenbelastung bei der Röntgen-Aufnahme besonders gering halten.

Insbesondere kann dabei herstellungstechnisch vorteilhaft der Mundbereich durch das Trägerelement gebildet sein.

Vorzugsweise weisen die Röntgen-Referenzkörper jeweils einen Durchmesser auf, der kleiner als 10 mm ist, insbesondere kleiner als 7 mm. Hierdurch lässt sich bei guter Erkennbarkeit im Röntgenbild eine unerwünschte Beeinträchtigung der Röntgenaufnahme durch die Röntgen-Referenzkörper besonders gering halten. Dabei lässt sich auch eine Beeinträchtigung des Menschen bei der Benutzung des Registriergeräts besonders gering halten.

Vorzugsweise weisen die Röntgen-Referenzkörper jeweils einen kugelabschnittförmigen oder kugelförmigen Oberflächenbereich auf. Hierdurch lässt sich im Röntgenbild eine Lagebestimmung besonders einfach und präzise durchführen.

Vorzugsweise sind die wenigstens drei Röntgen-Referenzkörper jeweils gegenseitig weiter als 10 mm voneinander entfernt, insbesondere weiter als 30 mm. Auch dies dient einer besonders geeigneten bzw. präzisen Lagebestimmung.

Vorzugsweise ist die Bissgabel auch dazu ausgebildet, eine plastische Masse zur Erfassung eines Abdrucks der Zahnreihe des Unterkiefers aufzunehmen. Auf diese Weise lässt sich eine Relativposition zwischen Oberkiefer und Unterkiefer, insbesondere die entsprechende zentrische Position besonders einfach erfassen.

Die Erfindung wird im Folgenden anhand eines Ausführungsbeispiels und mit Bezug auf die Zeichnungen näher erläutert. Es zeigen:
- Fig. 1: eine Skizze zu einer Bissgabel eines erfindungsgemäßen Registriergeräts und
- Fig. 2: eine Skizze zu dem Registriergerät.

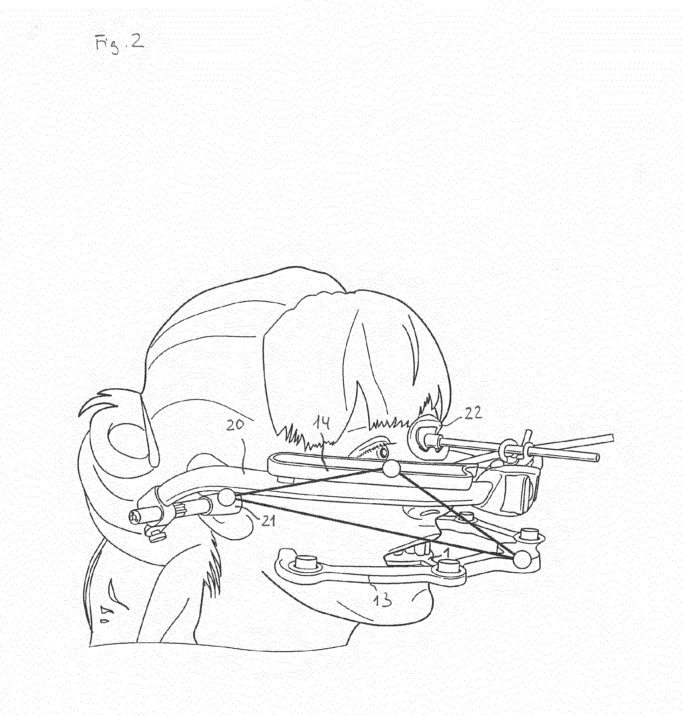

In Fig. 2 ist eine Skizze zu einem erfindungsgemäßen elektronischen Registriergerät gezeigt. Das Registiergerät dient zur Erfassung von Bewegungen des Unterkiefers eines Menschen relativ zu dem Oberkiefer des Menschen. Das Registriergerät kann insbesondere - soweit im Folgenden nicht anderweitig beschrieben - die Merkmale des eingangs erwähnten Geräts "ARCUS digma" der Anmelderin aufweisen.

Das Registriergerät umfasst ein Kopfteil 20 mit Stützelementen zum Stützen des Kopfteils 20 an dem Kopf eines Patienten. Diese Stützelemente können insbesondere zwei rückwärtige Abstützelemente 21 umfassen, die zur Anlage im Bereich der beiden Ohren, beispielsweise zur Anlage in den äußeren Gehörkanälen, ausgebildet sind, sowie eine Nasenstütze 22, die zur Anlage am oberen Nasenansatz ausgebildet ist.

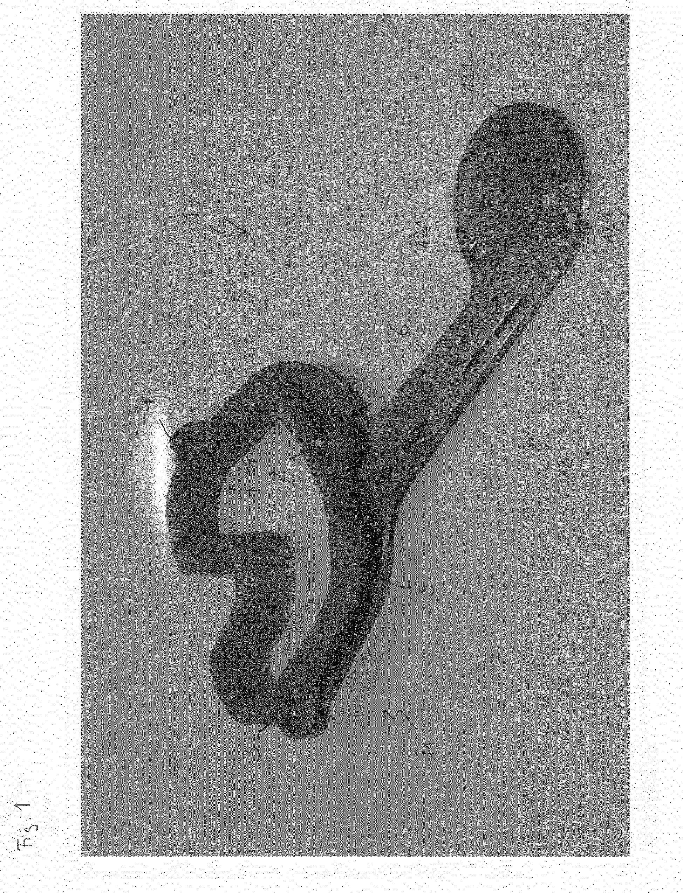

Weiterhin umfasst das Registriergerät eine Bissgabel 1, die zur Erfassung einer Relativposition des Oberkiefers zu Bezugspunkten am Kopf des Menschen dient bzw. ausgebildet ist. In Fig. 1 ist die Bissgabel 1 in separierter Form skizziert.

Die Bissgabel 1 kann insbesondere dazu ausgebildet sein, mit einem Sende- und/oder Empfangs-Element 13 verbunden zu werden, das zur Erfassung der Bewegungen des Unterkiefers relativ zu dem Oberkiefer mit einem, an dem Kopfteil 20 ausgebildeten oder angeordneten weiteren Sende- und/oder Empfangs-Element 14 zusammenwirkt. Diese Verbindung ist vorzugsweise reversibel lösbar gestaltet. Im gezeigten Beispiel weist die Bissgabel 1 wenigstens ein, hierfür ausgestaltetes Verbindungselement 121 auf, beispielsweise in Form wenigstens eines Lochs.

Die Bissgabel 1 ist dazu ausgebildet, eine plastische Masse 7, beispielsweise Wachs oder Silikon zur Erfassung eines Abdrucks der Zahnreihe des Oberkiefers aufzunehmen.

Weiterhin umfasst das Registriergerät eine Unterkieferbefestigung zur Erfassung von Bewegungen des Unterkiefers gegenüber dem Oberkiefer. Die Unterkieferbefestigung kann insbesondere einen abgewinkelten, länglichen Kontaktbereich aufweisen, der dazu vorgesehen ist, beispielsweise über eine Klebeverbindung mit den Frontalflächen der vorderen Zähne des Unterkiefers verbunden zu werden.

Die Bissgabel 1 weist wenigstens drei Röntgen-Referenzkörper 2, 3, 4 auf. Die Röntgen-Referenzkörper 2, 3, 4 weisen dabei ein Material auf, das in einem Röntgenbild erkennbar ist. Insbesondere kann es sich bei dem Material um ein Material handeln, das für Röntgenstrahlung zumindest überwiegend undurchlässig ist, also beispielsweise Metall. Vorzugsweise bestehen die Röntgen-Referenzkörper aus einem Metall.

Auf diese Weise lässt sich eine Zuordnung zwischen den Röntgen-Referenzkörpern und dem Oberkiefer einerseits und den Bewegungen des Unterkiefers gegenüber dem Oberkiefer andererseits herstellen. Diese Information eignet sich beispielsweise besonders bei der Herstellung einer Bohrschablone für ein Implantat oder bei der Kiefergelenkdiagnostik.

Vorteilhaft weist die Bissgabel ein Trägerelement 5 auf, an dem die Röntgen-Referenzkörper 2, 3, 4 angeordnet sind. Die Röntgen-Referenzkörper 2, 3, 4 sind dabei vorzugsweise unmittelbar an dem Trägerelement 5 angeordnet. Insbesondere sind die Röntgen-Referenzkörper 2, 3, 4 lagefest gegenüber dem Trägerelement 5 fixiert angeordnet. Das Trägerelement 5 besteht dabei aus einem Material, das für Röntgenstrahlung zumindest überwiegend durchlässig ist. Insbesondere kann das Trägerelement 5 aus Kunststoff bestehen.

Eine besonders gute Lagesicherung der Röntgen-Referenzkörper 2, 3, 4 gegenüber dem Trägerelement 5 lässt sich dabei erzielen, wenn das Trägerelement 5 aus einem Stück besteht bzw. einstückig ausgebildet ist.

Gemäß einer (in den Figuren nicht gezeigten) Variante besteht die Bissgabel 1 lediglich aus dem Trägerelement 5 und den wenigstens drei Röntgen-Referenzkörpern 2,3,4.

Hierzu alternativ weist die Bissgabel 1 vorzugsweise außerdem ein weiteres Teil 6 auf, das mit dem Trägerelement 5 mittels Verbindungselementen reversibel lösbar verbunden ist. Die Verbindungselemente umfassen dabei vorteilhaft ein Schnapp- oder Rastelement. Hierdurch lässt sich das weitere Teil 6 vor Erstellung der Röntgenaufnahme besonders einfach von dem Trägerelement 5 lösen, so dass die Röntgenaufnahme durch das weitere Teil 6 nicht gestört werden kann. Dementsprechend kann das weitere Teil 6 aus einem Material bestehen, das Röntgenstrahlen merklich beeinflusst, also beispielsweise aus einem Metall.

Handhabungsfreundlich weist die Bissgabel 1 vorzugsweise einen Mundbereich 11 auf, der dafür vorgesehen ist, zur Erfassung des Abdrucks in den Mund des Menschen eingeführt zu werden, sowie einen Haltebereich 12, der dafür vorgesehen ist, zur Erfassung des Abdrucks zumindest größtenteils außerhalb des Munds zu verbleiben, wobei die Röntgen-Referenzkörper 2, 3, 4 an dem Mundbereich 11 ausgebildet sind. Es kann dabei vorgesehen sein, dass der Haltebereich 12 unmittelbar an den Mundbereich 11 angrenzt. Der Mundbereich 11 kann beispielsweise durch das Trägerelement 5 gebildet sein.

Das oben erwähnte Verbindungselement 121 ist dabei vorzugsweise in bzw. an dem Haltebereich 12 ausgebildet.

Die Röntgen-Referenzkörper 2, 3, 4 sind vorzugsweise so gestaltet, dass sie jeweils einen Durchmesser aufweisen, der kleiner als 10 mm ist, besonders bevorzugt kleiner als 7 mm. Beispielsweise können die Röntgen-Referenzkörper 2, 3, 4 jeweils einen Durchmesser aufweisen, der zwischen 0,5 mm und 3 mm beträgt.

Eine besonders einfache Lagebestimmung im Röntgenbild ist ermöglicht, wenn die Röntgen-Referenzkörper 2, 3, 4 jeweils einen kugelabschnittförmigen oder kugelförmigen Oberflächenbereich aufweisen. Vorzugsweise weisen die Röntgen-Referenzkörper 2, 3, 4 jeweils einen Oberflächenbereich auf, der wenigstens eine Halbkugel beschreibt bzw. festlegt.

Eine besonders große Genauigkeit lässt sich dabei auch erzielen, wenn die wenigstens drei Röntgen-Referenzkörper 2, 3, 4 jeweils gegenseitig weiter als 10 mm voneinander entfernt bzw. beabstandet sind, vorzugsweise weiter als 30 mm. Beispielsweise kann vorgesehen sein, dass ein erster Röntgen-Referenzkörper 2 der wenigstens drei Röntgen-Referenzkörper 2, 3, 4 mit Bezug auf den Oberkiefer im Bereich der Lage der Frontzähne angeordnet ist, ein zweiter Röntgen-Referenzkörper 3 der wenigstens drei Röntgen-Referenzkörper 2, 3, 4 im Bereich der Lage der rechten Backenzähne und ein dritter Referenzkörper 4 der wenigstens drei Röntgen-Referenzkörper 2, 3, 4 im Bereich der Lage der linken Backenzähne.

Die Bissgabel 1 ist vorzugsweise auch dazu ausgebildet, eine plastische Masse zur Erfassung eines Abdrucks der Zahnreihe des Unterkiefers aufzunehmen. Bei der plastischen Masse kann es sich um die oben erwähnte plastische Masse 7 handeln, die auch zur Erfassung des Abdrucks der Zahnreihe des Oberkiefers dient. So lässt sich besonders geeignet eine Relativposition zwischen dem Oberkiefer und dem Unterkiefer erfassen, insbesondere eine entsprechende zentrische Position.

## Patentansprüche

1. Elektronisches Registriergerät zur Erfassung von Bewegungen des Unterkiefers eines Menschen relativ zu dem Oberkiefer des Menschen, aufweisend
- eine Bissgabel (1) zur Erfassung einer Relativposition des Oberkiefers zu Bezugspunkten am Kopf des Menschen,
wobei die Bissgabel (1) dazu ausgebildet ist, eine plastische Masse (7) zur Erfassung eines Abdrucks der Zahnreihe des Oberkiefers aufzunehmen und
- eine Unterkieferbefestigung zur Erfassung von Bewegungen des Unterkiefers gegenüber dem Oberkiefer,
**dadurch gekennzeichnet,**
**dass** die Bissgabel (1) wenigstens drei Röntgen-Referenzkörper (2, 3, 4) aufweist, die ein Material aufweisen, das in einem Röntgenbild erkennbar ist, insbesondere ein Metall.

2. Elektronisches Registriergerät nach Anspruch 1,
bei dem die wenigstens drei Röntgen-Referenzkörper (2, 3, 4) aus dem Material bestehen.

3. Elektronisches Registriergerät nach Anspruch 1 oder 2,
bei dem die Bissgabel (1) ein Trägerelement (5) aufweist, an dem die Referenzkörper (2, 3, 4) angeordnet sind, wobei das Trägerelement (5) aus einem Material besteht, das für Röntgenstrahlen zumindest überwiegend durchlässig ist, insbesondere aus einem Kunststoff.

4. Elektronisches Registriergerät nach Anspruch 3,
bei dem das Trägerelement (5) aus einem Stück besteht bzw. einstückig ausgebildet ist.

5. Elektronisches Registriergerät nach Anspruch 3 oder 4,
bei dem die Bissgabel (1) lediglich aus dem Trägerelement (5) und den wenigstens drei Röntgen-Referenzkörpern (2, 3, 4) besteht.

6. Elektronisches Registriergerät nach Anspruch 3 oder 4,
bei dem die Bissgabel (1) weiterhin ein weiteres Teil (6) aufweist, das mit dem Trägerelement (5) mittels Verbindungselementen, insbesondere reversibel lösbar verbunden ist.

7. Elektronisches Registriergerät nach Anspruch 6,
bei dem die Verbindungselemente ein Schnapp- oder Rastelement umfassen.

8. Elektronisches Registriergerät nach einem der vorhergehenden Ansprüche,
bei dem die Bissgabel (1) einen Mundbereich (11) aufweist, der dafür vorgesehen ist, zur Erfassung des Abdrucks in den Mund eingeführt zu werden, sowie einen Haltebereich (12), der dafür vorgesehen ist, zur Erfassung des Abdrucks zumindest größtenteils außerhalb des Munds zu verbleiben,
wobei die Röntgen-Referenzkörper (2, 3, 4) an dem Mundbereich (11) ausgebildet sind.

9. Elektronisches Registriergerät mit den in den Ansprüchen 6 und 8 oder 7 und 8 genannten Merkmalen,
bei dem der Mundbereich (11) durch das Trägerelement (5) gebildet ist.

10. Elektronisches Registriergerät nach einem der vorhergehenden Ansprüche,
bei dem die Röntgen-Referenzkörper (2, 3, 4) jeweils einen Durchmesser aufweisen, der kleiner als 10 mm ist, vorzugsweise kleiner als 7 mm.

11. Elektronisches Registriergerät nach einem der vorhergehenden Ansprüche,
bei dem die Röntgen-Referenzkörper (2, 3, 4) jeweils einen kugelabschnittförmigen oder kugelförmigen Oberflächenbereich aufweisen.

12. Elektronisches Registriergerät nach einem der vorhergehenden Ansprüche,
bei dem die wenigstens drei Röntgen-Referenzkörper (2, 3, 4) jeweils gegenseitig weiter als 10 mm voneinander entfernt sind, vorzugsweise weiter als 30 mm.

13. Elektronisches Registriergerät nach einem der vorhergehenden Ansprüche,
bei dem die Bissgabel auch dazu ausgebildet ist, eine plastische Masse zur Erfassung eines Abdrucks der Zahnreihe des Unterkiefers aufzunehmen.
